Europäisches Patentamt

European Patent Office

Office européen des brevets

(19)

(11) Publication number: **0 005 866**
**B1**

# EUROPEAN PATENT SPECIFICATION

(45) Date of publication of patent specification: **26.08.81**

(21) Application number: **79101787.4**

(22) Date of filing: **06.06.79**

(51) Int. Cl.³: **A 61 M 1/03, B 01 D 13/00**

(54) An oxygenator.

(30) Priority: **06.06.78 JP 68064/78**
**28.03.79 JP 40380/79 U**

(43) Date of publication of application:
**12.12.79 Bulletin 79/25**

(45) Publication of the grant of the European patent:
**26.08.81 Bulletin 81/34**

(84) Designated Contracting States:
**BE CH DE FR GB IT NL SE**

(56) References cited:
**DE - A - 2 060 167**
**DE - A - 2 652 856**
**DE - A - 2 711 995**
**DE - A - 2 744 855**
**DE - A - 2 746 542**
**US - A - 3 674 628**
**US - A - 4 020 230**
**US - A - 4 055 696**

(73) Proprietor: **TERUMO CORPORATION**
**44-1, 2-chome, Hatagaya Shibuya-Ku**
**Tokyo 151 (JP)**

(72) Inventor: **Hasegawa, Hiroshi**
**42-6, 7-chome, Kokuryo-cho**
**Chofu-shi Tokyo (JP)**
Inventor: **Fukasawa, Hiromichi**
**2, 1-chome, Koyanagi-cho**
**Fuchu-shi Tokyo (JP)**

(74) Representative: **Hänzel, Wolfgang, Dipl.-Ing. et al,**
**Henkel, Kern, Feiler & Hänzel Patentanwälte**
**Möhlstrasse 37**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

An oxygenator

This invention relates to an oxygenator including a cylindrical housing, a bundle of hollow fibers arranged within the housing in the axial direction thereof, a first liquid chamber formed between the outer surface of the fiber bundle and the inner surface of the housing inlet and outlet ports for first liquid passing through the wall of the housing and communicating with the first liquid chamber, partition walls supporting the end portions of the hollow fibers, separating the open ends of the hollow fibers from the first liquid chamber and defining the length of the first liquid chamber, and inlet and outlet ports for second liquid and communicating with the interior space of each of the hollow fibers.

In conducting open heart surgery for medical treatment of a heart disease or a large blood vessel, it is customary to use an oxygenator. Oxygenators may be of the bubble type, the membrane type, etc. It is expected that membrane type oxygenators which cause minimum damage to the blood, will provide the majority of oxygenators in future. An oxygenator of this type generally employs a sheet of silicone rubber membrane as a gas exchange membrane, wherein the blood is passed along one surface of the silicone ruber membrane, with a stream of oxygen gas being passed along the other surface of the membrane. In this case, oxygen in the stream of oxygen gas and $CO_2$ in the blood are diffused across the membrane by the driving force created by the differences in partial pressure of oxygen and $CO_2$ between both sides of the membrane, resulting in exchange of oxygen gas for $CO_2$.

The conventional oxygenator outlined above is defective in that the silicone rubber membrane should be reasonably thick in view of the required mechanical strength thereof, leading to an inefficient $CO_2$ removal from the blood. If the oxygen supply rate is increased in an attempt to improve the $CO_2$ removal efficiency, the blood is caused to contain an excessive amount of oxygen. In other words, the respiratory quotient is caused to fall outside the physiological range.

It is known to the art to use as the gas exchange membrane a microporous membrane made of a hydrophobic material in place of a silicone rubber membrane. In the conventional oxygenator, however, that membrane is used in a plate (sheet) or coil form, rendering it necessary to dispose a spacer between two adjacent membranes for preventing mutual blocking of the membranes and for keeping constant the passageways of the blood and gas. What should be noted is that blood platelets are deposited on the spacer, resulting in failure for the treated blood to sufficiently recover its hemostatic ability. Further, thrombi are formed in the treated blood. Still further, the spacer tends to cause damage to the membrane, gives rise to the occurrence of pin holes and makes the artificial lung bulky.

It has also been proposed to use as a gas exchange membrane, hollow fibers which permit smooth flow of blood and serve to eliminate foreign matter in the blood passageway (see DE—A 2 744 855). Further, hollow fibers can be bundled, rendering it possible to assemble the device easily and to make the device smaller in size. It is one of the greatest requirements raised by the user to reduce the size of an oxygenator because a bulky device is difficult to handle. Still further, using a hollow fiber oxygenator facilitates the removal of air bubbles in priming operation compared with using a plate or coil oxygenator. It is also important to note that the blood should flow through an oxygenator at a high rate, so that the membrane housed in the device should be strong enough to withstand the pressure exerted by the blood. Needless to say, a hollow fiber is stronger than a flat membrane. An additional merit to be noted is that the device using hollow fibers is much simpler in structure than that using flat or tubular membranes, resulting in that hollow fiber type devices are more uniform in quality. In spite of these merits, an artificial lung utilizing hollow fibers has not yet been put into practical use because of the difficulties in selecting a suitable material of the hollow fiber and in constructing the device so as to provide improved $O_2$—$CO_2$ exchange efficiency.

The invention as claimed is intended to provide a remedy. It solves the object of providing a hollow fiber type oxygenator having an improved gas exchange efficiency, and being small in size, easy to handle and stronger than those using a flat membrane.

In a oxygenator of the above mentioned type, this solution comprises:
the hollow fibers being made of polyolefin resin and each fiber having an inner diameter of from 100 to 300 $\mu$m, a wall thickness of from 10 to 50 $\mu$m, an average pore size of from 0,02 to 0,1 $\mu$m, and a porosity of from 20 to 80%, the first liquid chamber being an oxygen chamber, and the second liquid chamber being a blood chamber.

Some ways of carrying out the invention can be found in the following detailed description with reference to the accompanying drawings, in which:

Figure 1 is a schematical view of an oxygenator according to one embodiment of this invention,

Figure 2 and 3 are graphs each showing the relationship between the inner diameter of the hollow fiber and the gas exchange capability,

Figure 4 is a cross sectional view showing how the hollow fiber embedded in a potting material peels from the potting material; and

Figure 5 is a schematical sectional view of an oxygenator according to another embodiment of this invention.

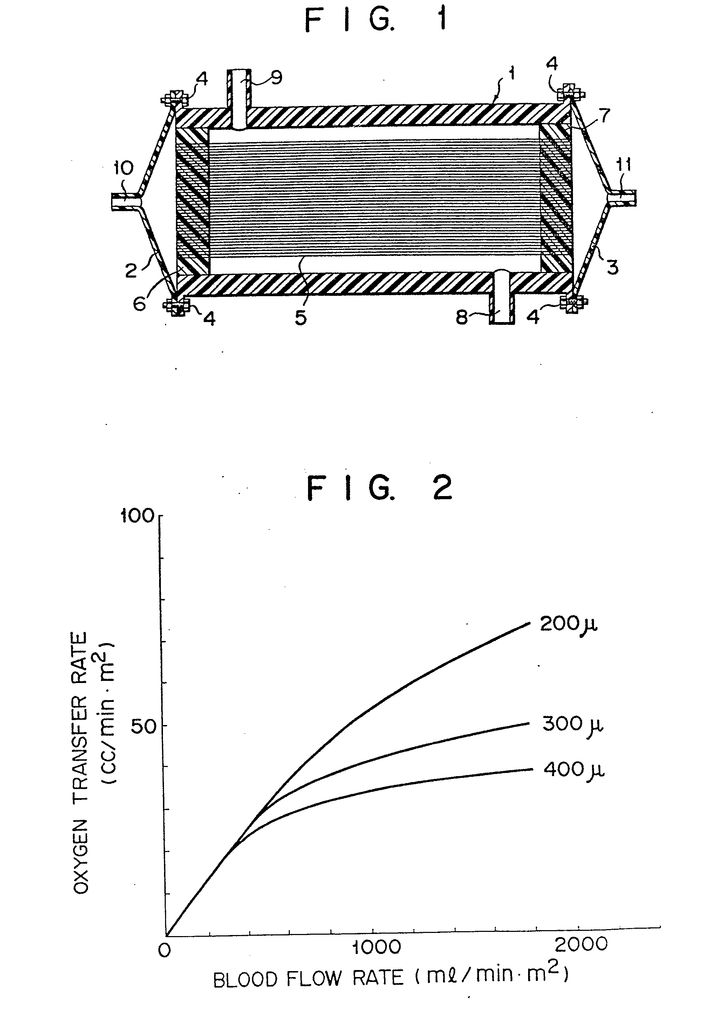

The oxygenator as shown in Figure 1 comprises a cylindrical housing 1 and funnel-shaped caps 2 and 3 mounted to the ends of the housing by means of crews 4. Arranged within the housing 1 in the axial direction thereof is a bundle of, for example, 10,000 to 60,000 porous hollow fibers 5 made of polyolefin resin. Both end portions of the hollow fiber bundle are supported by partition walls 6 and 7 fixed to the end portions of the housing 1. Incidentally, these partition walls are formed to fill the clearances between the outer surfaces of the hollow fibers. It follows that an oxygen chamber defined by the inner surfaces of the partition walls, outer surface of the hollow fiber bundle and inner surface of the housing is completely isolated from the interior space of the hollow fiber and from the outer spaces defined by the outer surfaces of the partition walls and the inner surfaces of the caps 2 and 3, respectively. As shown in Figure 1, an oxygen inlet port 8 and an oxygen outlet port 9 each communicating with the oxygen chamber mentioned above pass through the wall of the housing 1 near the ends thereof. On the other hand, the caps 2 and 3 are provided with a blood inlet port 10 and a blood outlet port 11, respectively. Naturally, these inlet and outlet ports 10 and 11 communicate with the outer spaces mentioned above.

The porous hollow fiber 5 is made of polyolefin resin such as polyethylene, poly-propylene, polybutylene, polystyrene, polyvinyl-chloride, acrylonitrile-butadien-styrene ter-polymer, styrene-acrylonitrile copolymer, styrene-butadiene copolymer, poly-(4-methylpentene-1), polyvinyl-idene chloride and chlorinated polyethylene. It is necesary for the hollow fiber to have an inner diameter of 100 to 300 $\mu$m, a wall thickness of 10 to 50 $\mu$m, an average pore size of 0,02 to 0,1 $\mu$m and a porosity of 20 to 80%. Where a sheet-like silicone rubber membrane is used as in the conventional oxygenator, the gas exchange function is based mainly on the diffusion of the gas through the membrane. In the present invention, however, gases flow through the open cells of the porous membrane of polyolefin resin. Naturally, the gases are transferred smoothly through the wall of the hollow fiber, leading to a prominent improvement in the gas exchange capability of the hollow fiber.

According to the invention, the inner diameter of the hollow fiber through which flows the blood is specified to range between 100 $\mu$m and 300 $\mu$m as mentioned above. If the inner diameter is smaller than 100 $\mu$m, a high resistance is generated when the blood flows through the hollow fiber. In addition, the hollow fiber tends to be plugged or clogged. The upper limit of the inner diameter mentioned above has been determined by the experiments described in the following.

Specifically, the experiments were intended to examine the relationship between the blood flow rate and the oxygen transfer rate and between the blood flow rate and the oxygen saturation degree at the outlet port of the oxygenator. Used in the experiments were three kinds of oxygenators each comprising a bundle of porous hollow fibers, about 30 $\mu$m in wall thickness, made of polypropylene resin having a porosity of about 45 to 50% and an average pore size of about 0,05 to 0,065 $\mu$m. The oxygenators used were different from each other with respect to the inner diameters of the hollow fibers, i.e., the inner diameters were about 200 $\mu$m, about 300 $\mu$m and about 400 $\mu$m, respectively. Incidentally, the oxygen saturation degree of the blood was about 60% at the inlet of the oxygenator, e.g. in actual operation of an oxygenator.

Figure 2 showing the relationship between the blood flow rate and the oxygen transfer rate, reveals that the hollow fiber having an inner diameter of 200 $\mu$m was most effective for performing oxygen transfer to the blood. It is also seen that the larger the inner diameter, the lower the oxygen transfer rate. Incidentally, the dimension of the blood flow rate shown in Figure 2, i.e., ml/min · m$^2$, denotes the amount of the blood flowing through the hollow fiber every minute per square meter of the effective surface area of the hollow fiber. The dimension of the oxygen transfer rate shown in Figure 2 is thought obvious.

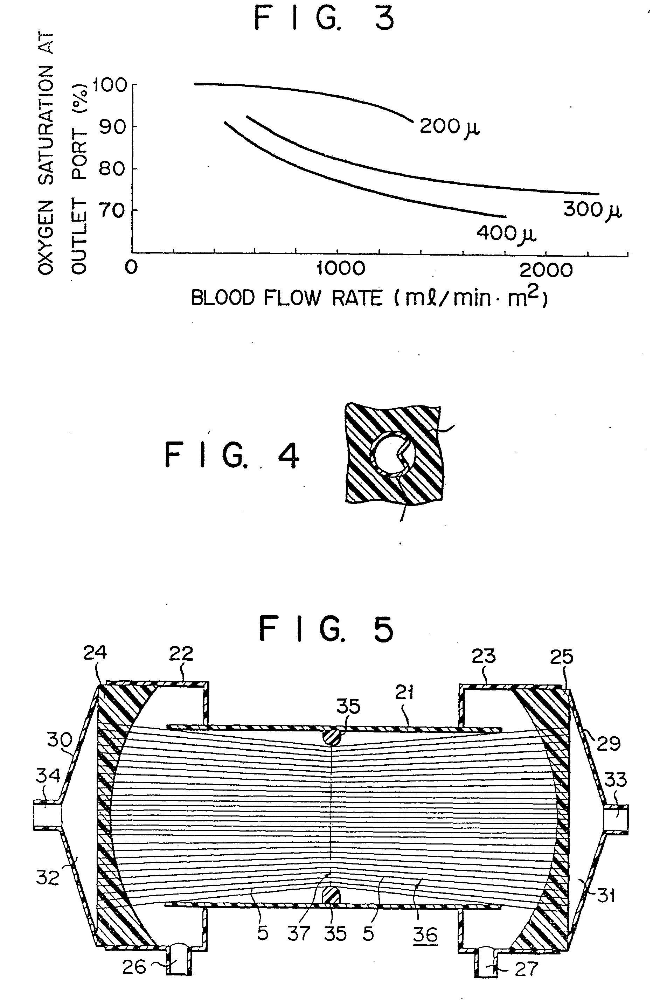

Figure 3 shows that the smaller inner diameter of the hollow fiber leads to higher oxygen saturation at the outlet of the oxygenator. In general, about 4 1/min of blood is treated in an oxygenator. Further, it is required that the difference in oxygen saturation be about 35% between the inlet and outlet of the oxygenator. Table 1 shows the surface area of the hollow fiber, priming volume and contact time of blood within the hollow fiber required for treating 4 1/min of blood in a manner to increase the oxygen saturation by 35% at the outlet of the oxygenator. Naturally, the data shown in Table 1 were obtained from the data plotted in Fig. 3.

TABLE 1

| Inner Diameter of Hollow Fiber ($\mu$m) | Contact Time (sec) | Surface Area ($m^2$) | Priming Volume ($cm^3$) |
|---|---|---|---|
| 200 | 2,9 | 3,9 | 193 |
| 300 | 7,5 | 6,2 | 467 |
| 400 | 13,5 | 9,0 | 900 |

Table 1 shows that the hollow fiber having an inner diameter of 400 $\mu$m necessitates marked increases in required contact time, priming volume and surface area of the hollow fiber. The requirement of an increased hollow fiber surface area results in an enlargement of the device and in increased manufacturing costs of the hollow fiber. In addition, water evaporation from the blood and deposition of the blood component to the fiber come out as problems to be solved. On the other hand, the increase in the amount of blood for priming results in side reaction of blood transfusion such as occurrences of blood-types incompatibility and infection of serum hepatitis.

Under the above circumstances, it is preferred for the inner diameter of the hollow fiber to range between 100 $\mu$m and 300 $\mu$m.

The other properties of the hollow fiber of polyolefin resin according to the invention have been determined in view of the gas permeability through the wall of the hollow fiber, mechanical strength of the fiber, etc. As described later, the partition walls 6 and 7 shown in Figure 1 are formed by subjecting a potting material introduced into the housing 1 to centrifugal operation. If the wall of the hollow fiber is thinner than 10 $\mu$m or the porosity of the hollow membrane is higher than 80%, the hollow fiber is caused to bear an undesirably great number of pin holes by the centrifuging of the potting material. However, it is unnecessary in terms of mechanical strength to use a hollow fiber having a wall thickness of more than 50 $\mu$m. In addition, such a thick hollow fiber results in an increase of the dimensions of the fiber bundle and, thus, of the oxygenator itself, as well as in inefficient $CO_2$ removal from the blood. A hollow fiber having a porosity of less than 20% is also undesirable because such a hollow fiber would fail to perform a satisfactory gas exchange function.

The hollow fibers of porous membrane of polyolefin resin used in this invention can be prepared in accordance with the method described in, for example, U.S. Patent US—A—4055696 or laid-open German patent application DE—A—2737745. The method disclosed in the German application mentioned above permits to produce hollow fibers of resins other than polyolefin series resins. However, polyolefin series resins have hydrophobic surfaces and, thus, are superior to other resins in compatibility with blood. In addition, polyolefin series resins are preferred in terms of the manufacturing cost of the hollow fiber.

In this invention, it is preferred to coat the inner surface and open end faces of the hollow fiber with a thrombus-preventing material. As indicated in NIH (National Institute of Health) report-NIH-69-2047, a hollow fiber type artificial lung is defective in that the hollow fiber tends to become plugged or clogged by thrombus formation. According to the researches made by the inventors, it is important to apply said coating particularly to the end faces of the hollow fiber bundle, because blood coagulation tends to occur most prominently at these end faces. Naturally, the coating applied to the blood-contact portions of the hollow fiber mentioned above serves to prevent thrombus formation and plugging (clogging) of the hollow fiber. As a matter of fact, a prominent effect of such coating has been confirmed by experiment. Specifically, blood was passed through an oxygenator comprising hollow fibers the end faces of which had not been coated with a thrombus-preventing material, and through an artificial lung comprising hollow fibers having their end faces coated with a thrombus-preventing material, i.e., heparin-based material. About 15 to 30 minutes after the beginning of the operation, more than 50% of the non-coated fibers were found to have been plugged, in contrast to less than 5% for the coated fibers. This experiment proves that the thrombus formation at the end faces of the hollow fibers is the greatest cause of the fiber plugging, and that this difficulty can be overcome by coating the end faces with a thrombus-preventing material; of course, it is possible to apply the coating to the entire surfaces of the hollow fiber. A heparin-based material, e.g., benzalkonium-heparin, cethyl-pyridinium bomide-heparin, is suitable for use as a thrombus-preventing material. Other substances such as polyalkyl sulfone, methylcellulose and polydimethyl-siloxane also provide satisfactory coating materials, because these substances are comparable to the heparin-based material in thrombus-preventing effect and, in addition, exhibit a high gas permeability. When a coating is applied to the gas exchange surface of the hollow fibers, the coating layer may be about 1 to 20 $\mu$m thick. Certainly, the pores of the porous hollow fiber are covered with the coating layer, but the gas permeability through the wall of the hollow fiber is not excessively influenced, because the coating layer has a high gas permeability. On the other hand, the coating layer covering the pores of the hollow fiber serves to prevent water evaporation from the blood. Further, it may happen accidentally that the oxygen pressure exteriorly of the hollow fiber is rendered higher than the blood pressure inside the hollow fiber, though the blood pressure is kept higher than the oxygen pressure in the normal operation of an oxygenator. In this case, oxygen flows into the blood, thereby causing bubbling of the blood. However, the coating applied to the hollow fiber serves to prevent this bubbling problem. Needless to say, the coating is also effective for preventing the blood from being clotted.

It is described in "J. BIOMED. MATERS. RES. Vol. 8. 1974" that albumin is added to a priming solution so as to rinse the oxygenator. However, this method is not as effective as the coating of a thrombus-preventing material. In addition, it is necessary for the user of the oxygenator to conduct troublesome operations in practicing the method disclosed in the above-noted literature.

The partition walls 6 and 7 shown in Figure 1 are formed by employing a centrifugal operation, as mentioned above. In general, a high molecular potting material having a high polarity, such as polyurethane, silicone or epoxy resin, is poured into the housing 1 through the oxygen inlet and outlet ports 8 and 9, respectively. In this step, the housing 1 is rotated about the center thereof so as to throw by centrifugal force the potting material to the ends of the housing 1. More specifically, a bundle of a number of hollow fibers longer than the housing 1 and having their open ends sealed with a highly viscous resin, is first disposed in the housing 1. Then, a lid, not shown, having an inner diameter substantially equal to the outer diameter of the housing 1 is applied to each end of the hollow fiber bundle so as to completely cover the end portions of the bundle. Under this condition, a high molecular potting material is poured into the housing through the oxygen inlet and outlet ports 8 and 9. Then, the housing 1 is rotated about the center thereof. It follows that the potting material is centrifugally displaced to the end portions of the housing 1 so as to form potting material layers of substantially uniform thickness. After the potting material has been solidified, the lid is removed and the end portion of the fiber bundle is cut away by means of a sharp cutting tool so as to expose the interior spaces of the hollow fibers to the outside.

The partition wall formed by the process described above, however, might not be satisfactory because the polyolefin hollow fiber used according to the invention is low in polarity and, thus, of extremely poor adhesion to the potting material. In particular, the hollow fiber peels from the potting material, as shown in Figure 4, when the end portion of the fiber bundle is cut off after solidification of the potting material. If the gap resulting from such peeling of the hollow fiber extends through the partition wall, the partition wall quite naturally would fail to perform its proper function. Even if this gap does not extend through the partition wall, the blood flow would be disturbed and stagnate in the gap, resulting in the thrombus formation.

In order to overcome the difficulties mentioned above, it is preferred to oxidize the outer surface of the hollow fiber at the end portions which are to be embedded into the partition wall so as to introduce carbonyl groups, i.e. polar radicals, into the polyolefin fiber. The oxidation can be achieved by chemical treatment, flame treatment or electric discharge treatment. For the chemical treatment, it is possible to use a mixture of chromic acid with hydrochloric acid or sulfuric acid. For the electric discharge treatment, it is possible to employ plasma discharge, corona discharge, etc.

It has been found that, where the outer surface of the hollow fiber is treated by, for example, corona discharge of 1 KW, the percentage of peeled hollow fiber is as low as less than 5%, in contrast with more than 95% for the case of dispensing with an oxidation treatment. In other words, the oxidation treatment promotes substantially complete bonding between the hollow fiber and the potting material.

Figure 5 shows an oxygenator according to another embodiment of this invention. As shown, the housing of the oxygenator comprises a center cylinder 21 and outer cylinders 22, 23 larger in diameter than the center cylinder 21. As in the embodiment of Figure 1, a bundle 36 of, for example, 10,000 to 60,000 hollow fibers 5 is disposed within the housing. The hollow fiber bundle 36 is supported at the end portions by partition walls 24 and 25 formed at the outer end portions of the outer cylinders 22 and 23, respectively. Further, funnel-shaped head covers 29 and 30 are fixed to the outer faces of the partition walls 25 and 24, respectively, so as to form a blood inlet chamber 31 and a blood outlet chamber 32. Reference numerals 33 and 34 denote a blood inlet port and a blood outlet port, respectively. Still further, the outer cylinders 22 and 23 are provided with an oxygen inlet port 26 and an oxygen outlet port 27, respectively. Naturally, these ports 26 and 27 communicate with the oxygen chamber formed within the housing. Further, the partition walls 24 and 25 perfectly isolate the oxygen chamber from the blood inlet and outlet chambers 31 and 32, and from the interior spaces of the hollow fibers 5.

It is important to note that the center cylinder 21 is provided in its mid portion with an inward projection 35. The inward projection 35, which is integral with the center cylinder 21, serves to retain the hollow fiber bundle 36 disposed within the housing. It follows that the loading (packing) density of the hollow fibers 5 varies along the axial direction of the housing. Naturally, this density is highest at a clamped portion 37, with said density gradually decreasing toward the end portions of the hollow fibers. It is desirable to set the loading (packing) density to 50 to 80% at the clamped portion 37, to 30 to 60% at the ends of the center cylinder 21 provided that such density in the center portion 37 is by at least 1.1 times higher than that at the ends of the center cylinder 21, and to 20 to 40% at the outer faces of the partition walls 24 and 25. Incidentally, the term "loading (packing) density" used herein represents the percentage of the space occupied by the hollow fibers relative to the interior space of the housing in a section perpendicular to the axis of the housing, and is defined as follows:

$$D = \frac{AN}{B} \times 100 \ (\%)$$

where,

D ... loading density
B ... cross sectional area defined by the inner surface of the housing
A ... cross sectional area defined by the outer surface of one hollow fiber
N ... the number of hollow fibers

As appears from the drawing, the blood introduced through the blood inlet port 33 into the blood inlet chamber 31 flows through the interior spaces of the hollow fibers 5 to the blood outlet chamber 32 to become discharged through the blood outlet port 34. On the other hand, oxygen introduced into the oxygen chamber through the oxygen inlet port 26 flows through the clearances between the outer surfaces of the hollow fibers 5 toward the oxygen outlet port 27. It follows that oxygen is transferred into the blood through the porous wall of the hollow fiber, with carbon dioxide contained in the blood being transferred into the oxygen stream through said porous wall. It should be noted that channeling does not occur in the blood stream because the blood flows through a large number of very small hollow fibers. However, channeling tends to occur in the oxygen stream depending on the type of the hollow fiber distribution, resulting in an unsatisfactory gas exchange performance of the oxygenator. In the oxygenator of the invention, the gas transfer through the wall of the hollow fiber depends on the difference in partial pressure of the gas between the blood stream and the oxygen stream. The partial pressure difference should be about $9,07 \times 10^5$ dyn/cm² for oxygen and about $6,13 \times 10^4$ dyn/cm² for carbon dioxide, in order to enable the artificial lung to perform satisfactorily. In order to provide the required partial pressure difference for carbon dioxide, it is necessary for the outer surface of the hollow fiber to be constantly kept in contact with fresh oxygen. It follows that channeling of the oxygen stream has an exceedingly detrimental effect to, particularly, carbon dioxide removal from the blood stream.

However, the oxygenator shown in Fig. 5 permits to perform effective $O_2$—$CO_2$ exchange. Specifically, the hollow fiber bundle 36 is clamped in the center portion by the inward projection 35 (and is loose at both end portions) in the embodiment of Figure 5, permitting the hollow fibers 5 to be distributed uniformly within the housing. As a result, the oxygen gas is uniformly distributed within the housing so as to form a stable flow, resulting in improved $O_2$—$CO_2$ exchange efficiency. It should also be noted that the oxygen flows more rapidly at the fastened or clamped portion 37 of the fiber bundle, resulting in turbulance of the oxygen flow and, thus, in promotion of the gas transfer through the wall of the hollow fiber.

As described above, it is desirable to set the hollow fiber (packing) density to 50 to 80% at the clamped portion 37. When the loading (packing) density is below 50%, it is difficult to uniformly clamp and retain the hollow fiber bundle 36 by the inward projection 35. In this case, the hollow fibers 5 are not distributed uniformly at the clamped portion 37, giving rise to the occurrence of channeling or of a dead space in the oxygen stream and, thus, to unsatisfactory performance of $CO_2$ removal. When the loading (packing) density is above 80%, the hollow fibers in contact with the inward projection 35 are compressed to such degree as to become collapsed, resulting in restriction of blood passage, reduction of efficiency and blocking of the passage. In addition, it is in such case difficult to insert the hollow fiber bundle 36 into the housing.

As mentioned above, it is desirable to use a hollow fiber loading (packing) density of 30 to 60% at the ends of the center cylinder 21 with the provision that the loading density at the center portion 37 is by at least 1.1 times higher than that at the ends of the center cylinder 21. With a loading density lower than 30%, it is difficult to achieve a uniform distribution of the hollow fibers 5, this resulting in an inefficient gas exchange performance of the device. The inefficient performance is also caused when the loading density is higher than 60%. In this case, some hollow fibers are closely attached to each other, leading to the occurence of channeling in the oxygen stream and, thus, to inefficient performance of the device.

If the ratio of the loading (packing) density in the center portion 37 to that at the ends of the center cylinder 21 is less than 1.1, the effect of the squeezing or rapid turbulence of the oxygen gas stream may be insufficient.

The loading (packing) density of the hollow fibers at the outer faces of the partition walls 24 and 25 should be 20 to 40%, as described above. With a loading density lower than 20%, it is difficult to achieve a uniform distribution of the hollow fibers 5, resulting in that the blood stream fails to be distributed uniformly. In this case, thrombi tend to be caused at the outer faces of the partition walls. If the loading density is higher than 40%, some hollow fibers are closely attached to each other, resulting in that the potting material fails to enter the small clearances between the closely attached hollow fibers in the step of forming the partition walls 24 and 25. Naturally, the failure for the potting material to enter said clearances would result in leakage of fluid through the partition wall.

In the embodiment of Figure 5, the inward projection 35 is formed integral with the center cylinder 21. Alternatively, it is possible to mount a separately formed annular member within the center cylinder 21 so as to provide the inward projection 35. Further, the inward projection 35 may be omitted by allowing the inner surface of the center cylinder 21 to taper from the ends towards the center such that the inner diameter of the center cylinder 21 is smallest in the (longitudinal) center position.

As described in detail, the oxygenator shown in Figure 5 is characterized in that the bundle of a great number of hollow fibers is fastened or clamped by the inward projection 35 provided in the mid portion of the center cylinder 21. This fastening permits to distribute the hollow fibers uniformly within the housing, even if the fibers show a relatively nonuniform distribution at the end portion of the housing. It follows that the use of the inward projection facilitates the manufacture of an artificial lung, because high manufacturing precision is not required. In a addition, the oxygen gas is uniformly distributed within the housing and so as to form a stable stream, resulting in an efficient $O_2$—$CO_2$ exchange performance of the device. Further, turbulence of the oxygen gas stream is caused by the pressure of the inward projection 35, resulting in promotion of the $O_2$—$CO_2$ exchange performance of the device.

An experiment was conducted by using an oxygenator as shown in Figure 5, with the result that the RQ (respiratory quotient, i.e., the ratio of $CO_2$ transfer rate to $O_2$ transfer rate) of the device was 0,8 to 1,5. The oxygenator used in the experiment comprised the center cylinder 3,5 cm in inner diameter and 20 cm in length, the outer cylinders 22, 23 each having an inner diameter of 5 cm, and a bundle of about 9,000 polypropylene hollow fibers 5 each having an inner diameter of 200 $\mu$m and a wall thickness of 25 $\mu$m. The Polypropylene mentioned has an average pore size of 0,06 $\mu$m and a porosity of 45%. Further, the distance between the partition walls 24 and 25 was 17 cm. Still further, the loading (packing) density of the hollow fibers 5 was 50 to 80% at the fastened or clamped portion 37, 45% at the ends of the center cylinder 21, and 22% at the outer faces of the partition walls 24 and 25. In this experiment, the oxygen transfer rate was about 50 $cm^3$/min. A comparative test was conducted under the same condition by using an oxygenator which did not show the inward projection 35, with the result that the value of RQ was 0,4 to 1,1. Also, the oxygen transfer rate was found to be about 50 $cm^3$ in this experiment. In conclusion, the inward projection scarcely affects the $O_2$ transfer rate, but prominently enhances the $CO_2$ transfer rate. In addition, the variation in $CO_2$ transfer rate is greatly reduced by the presence of the inward projection. Since physiological RQ is 0,8, an artificial lung should desirably exhibit an RQ higher than 0,8. This demonstrates that the inward projection 35 provides for a prominent improvement of the performance of the artificial lung.

As described in detail, this invention renders possible to employ hollow fibers in practice for the gas exchange medium of an artificial lung. Naturally, the hollow fiber is higher in mechanical strength than the flat membrane used in the conventional artificial lung. In addition, the use of hollow fibers allows to form the device with substantially smaller dimensions than the conventional device.

**Claims**

1. An oxygenator, including a cylindrical housing (1; 21, 22, 23); a bundle of hollow fibers (5) arranged within the housing in the axial direction thereof; a first liquid chamber formed between the outer surface of the fiber bundle and the inner surface of the housing (1; 21—23); inlet and outlet ports (8, 9; 26, 27) for first liquid passing through the wall of the housing and communicating with the first liquid chamber; partition walls (6, 7; 24, 25) supporting the end portions of the hollow fibers (5), separating the open ends of the hollow fibers from the first liquid chamber and defining the length of the first liquid chamber; and inlet and outlet ports (10, 11; 33, 34) for second liquid and communicating with the interior space of each of the hollow fibers (5); characterized by the hollow fibers (5) being made of polyolefin resin and each fiber (5) having an inner diameter of from 100 to 300 $\mu$m, a wall thickness of from 10 to 50 $\mu$m, an average pore size of from 0,02 to 0,1 $\mu$m, and a porosity of from 20 to 80%; the first liquid chamber being an oxygen chamber; and the second liquid chamber being a blood chamber.

2. The oxygenator as claimed in claim 1, wherein the polyolefin resin is selected from the group consisting of polyethylene and polypropylene.

3. The oxygenator as claimed in claims 1 or 2, wherein the inner surfaces and open ends of the hollow fibers (5) are coated with a thrombus-preventing material.

4. The oxygenator as claimed in claims 1 or 2, wherein the hollow fibers (5) have polar radicals introduced at least to the outer surfaces at the portions supported by the partition walls (6, 7; 24, 25).

5. The oxygenator as claimed in claim 1, 2, 3 or 4, wherein the housing (21—23) is provided with an inward projection (35) serving to fasten or clamp the central portion (37) of the hollow fiber bundle.

6. The oxygenator as claimed in claim 5, wherein the loading (packing) density of the hollow fiber (5) is 50 to 80% at the fastened or clamped portion (37) and 30 to 60% at the outer faces of the partition walls (24, 25); and the loading (packing) density in the center portion of the housing (21—23) is by at least 1,1 times higher than at the ends of the housing (21—23).

## Revendications

1. Oxygénateur, comprenant une enveloppe cylindrique (1; 21, 22, 23); un paquet de fibres creuses (5) arrangé à l'intérieur de l'enveloppe le long de son axe; une chambre pour un premier liquide formée entre la surface extérieure de paquet des fibres et la surface intérieure de l'enveloppe (1; 21—23); des tubulures d'entrée et de sortie (8, 9; 26, 27) pour le premier liquide, traversant la paroi de l'enveloppe et communiquant avec la chambre pour le premier liquide; des parois de séparation (6, 7; 24, 25) supportant les parties d'extrémité des fibres creuses, séparant les bouts ouverts des fibres creuses de la chambre par le premier liquide et définissant la longueur de cette dernière; et des tubulures d'entrée et de sortie (10, 11; 33, 34) pour un second liquide, ces tubulures communiquant avec l'espace intérieur de chacune des fibres creuses; caractérisé en ce que les fibres creuses (5) sont en résine de polyoléfine, chaque fibre (5) ayant un diamètre intérieur compris entre 100 et 300 $\mu$m, une épaisseur de paroi comprise entre 10 et 50 $\mu$m, une grandeur de pores moyenne comprise entre 0,02 et 0,1 $\mu$m, et une porosité située entre 20 et 80%, que la chambre pour le premier liquide est une chambre à oxygène, et que la chambre pour le second liquide est une chambre à sang.

2. Oxygénateur selon la revendication 1, caractérisé en ce que la résine de polyoléfine est choisie parmi le polyéthylène et le polypropylène.

3. Oxygénateur selon la revendication 1 ou 2, caractérisé en ce que les surfaces internes et les bouts libres des fibres creuses (5) ont recouverts d'une substance prévenant les thrombus.

4. Oxygénateur selon la revendication 1 ou 2, caractérisé en ce que les fibres creuses (5) présentent des radicaux polaires introduits au moins aux surfaces extérieures des parties supportées par les parois de séparation (6, 7; 24, 25).

5. Oxygénateur selon la revendication 1, 2, 3 ou 4, caractérisé en ce que l'enveloppe (21—23) comprend une saillie intérieure (35) servant à fixer ou à serrer la partie centrale (37) du paquet des fibres creuses.

6. Oxygénateur selon la revendication 5, caractérisé en ce que la densité spatiale (le bourrage) de la fibre creuse (5) est de 50 à 80% sur la partie fixée ou serrée (37), et de 30 à 60% aux surfaces extérieures des parois de séparation (24, 25); et que la densité spatiale (le bourrage) dans la région centrale de enveloppe (21—23) est par un facteur d'au moins 1,1 plus élevée qu'aux extrémités des l'enveloppe (21—23).

## Patentansprüche

1. Oxygenator, bestehend aus einem zylindrischen Gehäuse (1; 21, 22, 23), einem im Gehäuse in dessen Axialrichtung angeordneten Bündel aus Hohlfasern (5), einer ersten, zwischen der Außenfläche des Faserbündels und der Innenfläche des Gehäuses (1; 21—23) gebildeten Flüssigkeitskammer, für eine erste Flüssigkeit vorgesehenen Einlaß- und Auslaßöffnungen (8, 9; 26, 27), welche die Wand des Gehäuses durchsetzen und mit der ersten Flüssigkeitskammer in Verbindung stehen, Trennwänden (6, 7; 24, 25), welche die Endabschnitte der Hohlefasern (5) haltern, die offenen Enden der Hohlfasern von der ersten Flüssigkeitskammer trennen und die Länge der ersten Flüssigkeitskammer bestimmen, und für eine zweite Flüssigkeit vorgesehenen Einläß- und Auslaßoffnungen (10, 11; 33, 34), die mit dem Innenraum jeder Hohlfaser (5) kommunizieren; dadurch gekennzeichnet, daß die Hohlfasern (5) aus einem Polyolefinharz hergestellt sind und jeweils einen Innendurchmesser von 100—300 $\mu$m, eine Wanddicke von 10—50 $\mu$m, eine durchschnittliche Porengröße von 0,02—0,1 $\mu$m und eine Porosität von 20—80% besitzen; daß die erste Flüssigkeitskammer eine Sauerstoffkammer ist; und daß die zweite Flüssigkeitskammer eine Blutkammer ist.

2. Oxygenator nach Anspruch 1, dadurch gekennzeichnet, daß das Polyolefinharz aus der Polyäthylen und Polypropylen umfassenden Gruppe gewählt ist.

3. Oxygenator nach Anspruch 1 oder 2, dadurch gekennzeichnet, daß die Innenflächen und die offenen Enden der Hohlfasern (5) mit einem eine Thrombusbildung verhindernden Material beschichtet sind.

4. Oxygenator nach Anspruch 1 oder 2, dadurch gekennzeichnet, daß in die Hohlfasern (5) polare Reste bzw. Radikale zumindest in den Außenflächen an den von den Trennwänden (6, 7; 24, 25) gehalterten Abschnitten eingearbeitet sind.

5. Oxygenator nach Anspruch 1, 2, 3 oder 4, dadurch gekennzeichnet, daß das Gehäuse (21—23) mit einem einwärts gerichteten Vorsprung (35) zur Festlegung oder Verspannung des Mittelteils (37) des Hohlfaserbündels versehen ist.

6. Oxygenator nach Anspruch 5, dadurch gekennzeichnet, daß die Fülldichte (Packungsdichte) der Hohlfasern (5) am festgelegten bzw. verspannten Abschnitt (37) 50—80% und an den Außenflächen der Trennwände (24, 25) 30—60% beträgt und daß die Fülldichte (Packungsdichte) im Mittelbereich des Gehäuses (21—23) um mindestens das 1,1-fache größer ist als an den Enden des Gehäuses (21—23).

# F I G. 1

# F I G. 2

# FIG. 3

# FIG. 4

# FIG. 5